# EUROPEAN PATENT APPLICATION

(11) **EP 1 867 838 A1**
(43) Date of publication of application: **19.12.2007**
(21) Application number: 06012062.3
(22) Date of filing: 12.06.2006
(51) Int. Cl.: F01D 5/28, C23C 4/10, C23C 24/04

(54) **A method of substituting a material component of coatings of gas turbine components**

(71) Applicant: SIEMENS AKTIENGESELLSCHAFT, 80333 München (DE)
(72) Inventor: Senior, Peter, Dr., LE8 5PY Countersthorpe Leicester (GB); Wilbraham, Nigel, Stourbridge West Midlands (GB)

(57) **Abstract**

A method of substituting a material component of coatings of gas turbine components during operation of the gas turbine, in which
- the components are charged,
- the material component is charged in opposite polarity to the gas turbine components, and
- the material component is added to a fluid stream which is led to the gas turbine.

## Description

The present invention relates to a method of substituting a material component of coatings of gas turbine components during operation of the gas turbine.

The operation of any gas turbine results in the degradation of turbine components through oxidation damage. The life and the strength of these components are limited. Therefore, the turbine components are removed from machines to be refurbished. A drawback of this method is that the machine has to be taken out of service during refurbishments. Therefore, this method is expensive and disruptive to the operation of the machine.

An objective of the present invention is to provide a method of substituting a material component of coatings of gas turbine components which can be performed in situ, i.e. during the operation of the gas turbine.

This objective is solved by a method according to claim 1. The dependent claims describe advantageous developments of the invention.

According to the present invention, a method of substituting a material component of coatings of gas turbine components during operation of the gas turbine is provided, in which
- the gas turbine components are charged,
- the material component is charged in opposite polarity to the gas turbine components, and
- the material component is added to a fluid stream which is, as such or after mixing with at least one further fluid, led to the gas turbine component.
The fluid may also undergo chemical reactions during or after mixing with the at least one further fluid, e.g. the fluid may be the exhaust gas of combustion, as long as a significant fraction of the material component is not altered by such a chemical reaction.

This method can be performed during the operation of the turbine. Therefore, the turbine has not to be taken out of service, and furthermore the turbine components do not have to be removed from the turbine to be refurbished.

By using an electrostatic fuel system, as described, e.g., in EP 1 139 020 A1, components can be electrically charged. The material component is added to a fluid which is led to the gas turbine and ignited. The charged material component will reach very high temperatures and a proportion will burn off. However, a proportion will not be burnt but will melt and reach turbine components. As the material component of the gas turbine components, which are to be substituted with the material component, are charged with opposite polarity, the material component will be attracted to the turbine component's surfaces. Specifically, the material component is attracted by the vane and/or blade surfaces of the gas turbine which will be electrically charged to the polarity opposite to the charge of the material component. The charge density of the vane and/or blades will be proportional to the surface features, such that regions of highest irregularity will have the highest charge density thereby attracting the highest proportion of the material component.

Advantageously, the component is a metallic coating. A metallic coating can be electrically charged in an easy and simple manner.

It is particularly advantageous when the fluid stream is a fuel stream. Fuel can be ignited in the gas turbine so as to achieve, in a combustion section of the gas turbine, temperatures which are able to melt the material component. A melting of the material component is particularly advantageous. In a molten state the material component does not damage the turbine component surfaces as it could do when being in a solid state, and a good binding to the coating with which the material component shall be substituted, can be achieved.

This also ensures that the protective material will preferentially bond to those areas of highest temperature (i.e. most in need of protection). Furthermore, because the greatest need for coating is where the highest temperature streams are found, and these highest temperature streams will have proportionately more protective material and better melting of it, the method will deposit protection preferentially in those areas of the turbine most in need of protection.

In an advantageous embodiment of the present invention, the fuel is injected by an electrostatic fuel injection system. An electrostatic fuel injection system is described, e.g., in EP 1 139 020 A1 which is taken as a reference with respect to the design of an electric fuel injection system. By charging the fuel electrostatically the combustion stability and the engine performance can be enhanced. At the same time, the material component added to the fuel will also be charged.

The coating of the turbine components may, e.g., be MCrAlY, where M stands for iron (Fe), cobalt (Co) or nickel (Ni) and Y stands for a rare earth element, e.g. hafnium (Hf), and/or yttrium (Y) and/or silicon (Si). In this case, the material component may be an aluminium compound. Generally, aluminium compounds are relatively stable to temperature and do not tend to decompose when reaching high temperatures.

In particular, the aluminium compound may be an aluminium oxide compound. Aluminium oxide compounds have high melting points so that they can melt in the combustion section of the gas turbine and impinge on surfaces of the gas turbine components in a molten state and solidify on them.

In an advantageous embodiment of the inventive method at least one aluminium oxide compound is added to a fuel which may, in principle, be a liquid or a gaseous fuel. The mixture of the aluminium oxide compound and the fuel is introduced into a combustion section of a turbine, especially of a gas turbine. In a particular embodiment, the mixture of aluminium oxide compound and liquid fuel is injected through a swirler assembly into a combustion pre-chamber of the gas turbine. In the combustion section, the aluminium oxide compound will reach very high temperatures. A portion of the charged aluminium oxide compound could therefore be deoxidised by carbon of the fuel to form aluminium cabide. However, a significant proportion will reach the turbine vanes and blades, in particular the nozzle guide vane (NGV), so as to impinge their surfaces and substitute the A1 of e.g. an MCrAlY coating.

According to the inventive method, the material component oxide compound can be further added to an air stream. First, the air stream is injected into a swirler, wherein it is mixed with the liquid or gaseous fuel. Then, the mixture so obtained is injected into the combustion zone of the gas turbine.

Advantageously, the aluminium oxide compound is selected from the group consisting of Al₂O₃, M'AlO₂ and M'Al₂O₄, wherein M' is Zr or Y. The compounds of the aforementioned type are suitable as coating materials for turbine components because they possess the required hardness and stability to temperature and oxidation.

In an advantageous embodiment of the present invention, the proportion of the added material component, e.g. an added aluminium oxide componund, is made dependent on the load conditions of the gas turbine.

The method can e.g. be accomplished in the combustor or the turbine section of a gas turbine engine.

A further advantageous modification may be made to the inventive method by increasing an airflow flowing through cooling holes in the gas turbine components. This will increase the resistance of the gas turbine components to a fraction of the material component entering the cooling holes during the substitution of the material component in the coatings of the gas turbine components. It will also raise the temperature of the target areas on the gas turbine components which will improve the bonding efficiency.

A fuel injection system for performing the inventive method comprises a duct for conducting at least one material component, especially an aluminium oxide compound, and a duct for conducting a liquid or gaseous fuel. Advantageously, the duct for conducting the material component and the duct for conducting fuel are joined to a common duct for conducting a mixture of fuel and aluminium oxide compound. Advantageously, the common duct conducts the mixture of aluminium oxide compound and fuel to a nozzle which is able to inject the mixture into a swirler assembly of the gas turbine. In an advantageous embodiment, the fuel injection system may comprise a charging means, which may, in particular, be an electrode arrangement. Advantageously, the electrode arrangement is disposed around the passage where the fuel droplets leave the duct for conducting the fuel stream.

Further features, properties and advantages of the present invention will become clear from the following description of embodiments of the invention in conjunction with the accompanying drawings.
Figure 1 schematically shows a longitudinal section of a combustion system by which the inventive method can be performed; and
Figure 2 schematically shows a longitudinal section of a fuel injection nozzle which can be used in the combustion system shown in Figure 1.

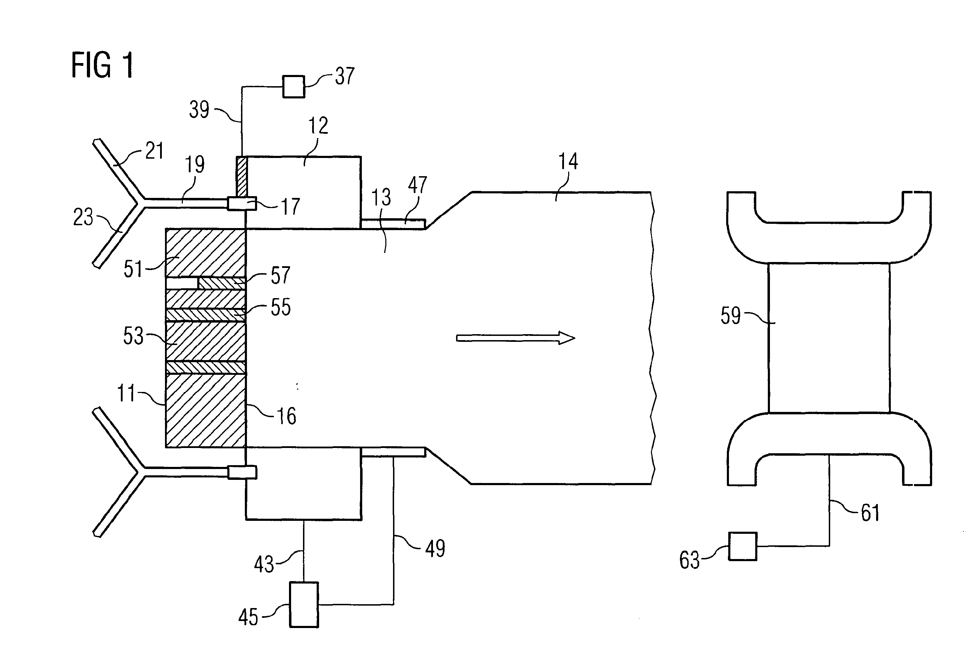

Figure 1 shows a combustion system. It comprises a burner head 11 attached to a swirler 12, and, in flow direction series, a combustion pre-chamber 13 and a main combustion chamber 14 which has a larger diameter than the pre-chamber 13. A burner face 16 of the burner head 11 forms the upstream end of the pre-chamber 13. Nozzles 17 are arranged at the burner face 16 and open into a swirler passage. Each nozzle 17 is connected to a suitable duct 19 for conducting a mixture of an aluminium oxide compound as material component and a liquid fuel. The duct 19 separates into a duct 21 for supplying the liquid fuel and a duct 23 for supplying the aluminium oxide compound.

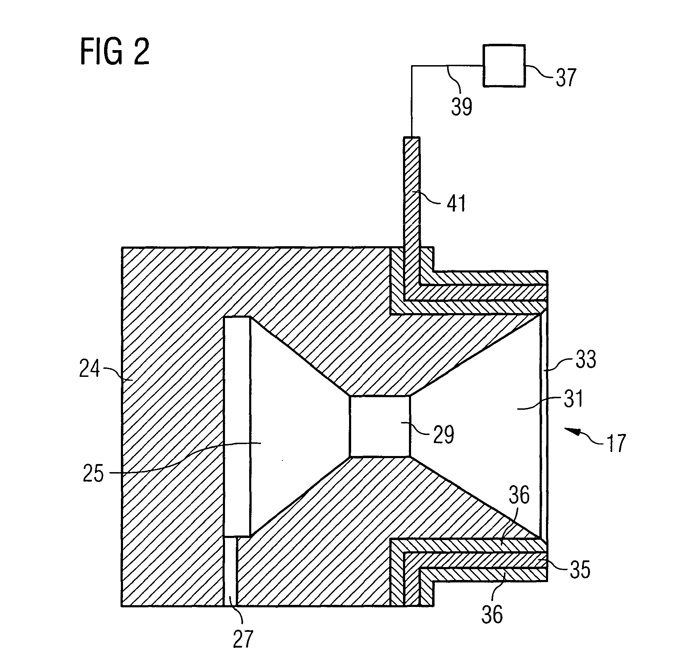

For a detailed description of the nozzle 17, reference is made to Figure 2. Each nozzle 17 comprises a nozzle body 24 provided with a circular section spin chamber 25. A mixture of liquid fuel and the aluminium oxide compound enters the spin chamber 25 tangentially through a bore 27 and leaves the spin chamber 25 through a throat 29 and a divergent passage 31 by an outlet 33. In the spin chamber 25, a vigorous rotational motion is given to the mixture so as to atomise the fuel into small droplets as it expands out of the passage 31 into the airstream within the preswirler passages.

Further, an electrode 35 is sandwiched between two insulating layers 36 arranged in the nozzle body 24. The electrode 35 surrounds the nozzle body 24 and defines the outlet 33 of the passage 31 so that an electrostatic charge can be given to the mixture of fuel and aluminium oxide compound. To provide this charge, a charge supply and control unit 37 is connected by line 39 to a conductor 41 supplying the electrodes 35 of the nozzles 17.

Returning to Figure 1, the swirler 12 comprises an electrode charged electrostatically by line 43 by a further charge supply and control unit 45. When charged, the electrode of the swirler 12 is charged at the same polarity as the fuel droplets.

Further, the pre-chamber 13 has a chamber wall 47 comprising an electrode charged electrostatically by line 49 by charge supply and control unit 45. When charged, the electrode of the pre-chamber 13 is charged at the same polarity as the fuel droplets.

Further, burner head 11 comprises two electrodes 51, 53 having electode faces at the burner face 16. When charged, the electrode 51 of the burner head 11 is charged at the same polarity as the fuel droplets and is connected to the electrode of the swirler 12, whereas the other electrode 53 is charged oppositely to the fuel droplets. An insulation layer 55 is arranged between the electrodes.

In operation, compressed air is supplied to the combustion system and moved through passages which are defined between vanes of the swirler 12. The air mixes with a mixture of fuel and aluminium oxide which is injected from the nozzles 17 at the burner face 16. The so obtained mixture of air, fuel and aluminium oxide is ignited by an igniter unit 57 so that a combustion flame forms in the main chamber 14. Successively feeded mixtures of air, fuel and aluminium oxide compound pass the combustion flame in chambers 13, 14 in which the aluminium oxide compound melts due to the high temperatures existing therein.

The exhaust gas resulting from the combustion, which carries the molten and charged aluminium oxide, leaves the main chamber 14 in the direction of the arrow shown and reaches, e.g., a guiding vane 59 of the gas turbine. The guiding vane 59 is an example of a turbine component the coating of which is to be substituted with the aluminium oxide compound.

The guiding vane 59 is connected by a line 61 to a charge supply and control unit 63 which charges its surfaces to a polarity being opposite to the polarity of the aluminium oxide compound. Consequently, the molten aluminium oxide compound is attracted by surfaces of the guiding vane 59, where it impinges and substitutes the Al of the vanes' coating.

An advantageous modification may be made to the operation of the gas turbine by a valve or other means to temporarily increase the airflow to the turbine cooling. This will increase the resistance of the turbine to protective material entering the cooling holes during the recoating process and at the same time increase the combustion and blading temperatures, enhancing the efficiency of melting the protective material. It will also raise the temperature of the target areas on the blade or vane which will improve the bonding efficiency. Because the process is short term, any penalty in blading file (extra creep etc.) will be relatively minor and far outweighed by the savings due to insitu recoating.

## Claims

1. A method of substituting a material component of coatings of gas turbine components (59) during operation of the gas turbine, in which
- the gas turbine components (59) are charged,
- the material component is charged in opposite polarity to the gas turbine components (59), and
- the material component is added to a fluid stream which is, as such or after mixing with at least one further fluid and/or after undergoing a chemical reaction, led to the gas turbine component (59).

2. The method, as claimed in claim 1, wherein the gas turbine component has a metallic coating.

3. The method, as claimed in claim 2, wherein the coating is MCrAlY and the material component is an aluminium compound.

4. The method, as claimed in claim 3, wherein the aluminium compound is an aluminium oxide compound.

5. The method, as claimed in claim 4, wherein the aluminium oxide compound is selected from the group consisting of Al₂O₃, M'AlO₂ , and M'Al₂O₄, wherein M' is Zr or Y.

6. The method, as claimed in on of the claims 1 to 5, wherein the fluid stream is a fuel stream.

7. The method, as claimed in claim 6, wherein the fuel is liquid fuel.

8. The method, as claimed in claim 7, wherein the fuel is injected by an electrostatic fuel injection system.

9. The method, as claimed in claims 1 to 8, wherein the proportion of the added material component is made dependent on the load conditions of the gas turbine.

10. The method, as claimed in claims 1 to 9, wherein an airflow flowing through cooling holes in the gas turbine components is increased.
